(19)

Europäisches
Patentamt
European
Patent Office
Office européen
des brevets

(11)     **EP 4 528 487 A1**

(12)     **EUROPEAN PATENT APPLICATION**
published in accordance with Art. 153(4) EPC

(43) Date of publication:
**26.03.2025   Bulletin 2025/13**

(21) Application number: **24816900.5**

(22) Date of filing: **26.02.2024**

(51) International Patent Classification (IPC):
***G06F 8/65*** *(2018.01)*

(52) Cooperative Patent Classification (CPC):
**G06F 8/65; G06F 8/658**

(86) International application number:
**PCT/CN2024/078554**

(87) International publication number:
**WO 2025/020520 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **26.07.2023   CN 202310932422**

(71) Applicant: **Huawei Technologies Co., Ltd.
Shenzhen, Guangdong 518129 (CN)**

(72) Inventors:
• **QIN, Liang**
  **Shenzhen, Guangdong 518129 (CN)**
• **ZHOU, Jun**
  **Shenzhen, Guangdong 518129 (CN)**
• **SUN, Chumin**
  **Shenzhen, Guangdong 518129 (CN)**
• **SUN, Jie**
  **Shenzhen, Guangdong 518129 (CN)**

(74) Representative: **Maiwald GmbH
Engineering
Elisenhof
Elisenstrasse 3
80335 München (DE)**

(54)     **PROGRAM UPDATE METHOD, ELECTRONIC DEVICE, AND SERVER**

(57)     A program update method includes: obtaining
an upgrade package of a target program; parsing the
upgrade package in a RAM to obtain a match field, a non-
match field, and a non-match data stream; based on a
sequence of the match field and the non-match field in a
match sequence, when a field that currently needs to be
operated is the match field, determining a source data
block to which a string associated with the match field
belongs, and reading the source data block to the RAM;
or when the field that currently needs to be operated is the
non-match field, reading, from the non-match data
stream, a target string associated with the non-match
field; and generating an intermediate file of the first
program file in the RAM based on the source data block
in the RAM and/or the target string, and writing the inter-
mediate file to a read-only memory ROM. When the
target program is upgraded, old and new files are split
into data blocks, and only data blocks of to-be-read and
to-be-written data are loaded to the RAM. In addition, only
a limited quantity of data blocks are retained in the RAM.
This maintains use of the RAM at a low level.

FIG. 12

**Description**

This application claims priority to Chinese Patent Application No. 202310932422.1, filed with the China National Intellectual Property Administration on July 26, 2023 and entitled "PROGRAM UPDATE METHOD, ELECTRONIC DEVICE, AND SERVER", which is incorporated herein by reference in its entirety.

**TECHNICAL FIELD**

This application relates to the technical field of information technologies (information technology, IT), and in particular, to a program update method, an electronic device, and a server.

**BACKGROUND**

With development of the internet of things, for system upgrade of devices with different sizes in the internet of things, an upgrade package needs to be downloaded from a server, and an upgrade program needs to be executed on the device. Usually, when a system or a program on the device is upgraded, the device needs to produce a new file based on a differential package downloaded from the server and a to-be-upgraded old file on the device. Then, the device upgrades the system or the program on the device based on the produced new file.

In a process of upgrading the system or the program on the device, both the old and new files required for upgrade need to be loaded to a random access memory (random access memory, RAM), resulting in a high requirement on memory of the device. As the system and the program become increasingly complex, update of the system or the program on the device has an increasingly high requirement on the memory of the device. A method for performing an upgrade operation by completely loading, to the RAM of the device, the old and new files required for upgrade also gradually becomes a performance bottleneck of system or program upgrade on the device.

**SUMMARY**

This application provides a program update method, an electronic device, a server, and a computer-readable medium, namely, a computer program product. During update, old and new files are split into data blocks, and only data blocks of to-be-read and to-be-written data are loaded to a RAM. In addition, only a limited quantity of data blocks are retained in the RAM. This maintains use of the RAM at a low level.

According to a first aspect, this application provides a program update method, applied to an electronic device. The method includes: obtaining an upgrade package of a target program, where the upgrade package carries a match sequence and a non-match data stream, the match sequence includes a match field and a non-match field, the match field indicates that a string in a first program file matches a string in the first program file or a string in a second program file, the non-match field indicates that a string in the first program file matches a string in the non-match data stream, the first program file and the second program file are program files of different versions of the target program, and a version of the first program file is later than a version of the second program file; parsing the upgrade package in a random access memory RAM to obtain the match field, the non-match field, and the non-match data stream; based on a sequence of the match field and the non-match field in the match sequence, when a field that currently needs to be operated is the match field, determining a source data block to which a string associated with the match field belongs, and reading the source data block to the RAM, where the source data block is obtained by splitting the second program file or an intermediate file obtained in a process of generating the first program file; or when the field that currently needs to be operated is the non-match field, reading, from the non-match data stream, a target string associated with the non-match field; and generating the first program file based on at least one source data block in the RAM and/or the target string.

In this solution, in a process of upgrading the target software on the terminal device, the second program file corresponding to the target software before upgrade is split into a plurality of data blocks. When the first program file is generated in the RAM, if data in a specific location in the first program file or the second program file needs to be read, only a data block corresponding to the data segment needs to be read to the RAM, and the entire first program file or the second program file does not need to be read to the RAM. This maintains use of the RAM at a low level. In this way, software upgrade can be efficiently performed on a thin device with a limited RAM.

In a possible implementation, the generating the first program file based on at least one source data block in the RAM and/or the target string includes: generating, in the RAM, the intermediate file of the first program file, and writing at least a part of the intermediate file to a read-only memory ROM, where the intermediate file of the first program file at least includes a part of data in the first program file.

In other words, in the process of generating the first program file in the RAM, the intermediate file of the first program file may be written to the ROM, to reduce occupation of the RAM.

In a possible implementation, a size of the at least a part of data is the same as a size of the source data block.

In other words, when the first program file is generated in the RAM, the generated first program file also needs to be split into data blocks, and each time data in the intermediate file of the generated first program file meets a size of a data block, the data block is written to the ROM. This ensures that only one block is reserved at an end at which the second program file is generated in the RAM, thereby reducing the use of the RAM.

In a possible implementation, the match field includes an old-match field and a self-match field, the old-match field indicates that a string in the first program file matches another string in the second program file, and the self-match field indicates that a string in the first program file matches a string other than a first string in the first program file; and the old-match field and the self-match field each further include a data location and a data length, where the data location is used to identify a start location, in the first program file or the second program file, of a string associated with a corresponding match field, and the data length is used to identify a length of the string associated with the corresponding match field.

In other words, the match field may further include the self-match field and the old-match field. Both the self-match field and the old-match field include data locations and data lengths of corresponding match fields in the self-match field and the old-match field, so that the corresponding match field may be obtained from the second program file or the intermediate file that generates the first program file based on the self-match field or the old-match field. When the match field represents an old match, the corresponding match field is the old-match field. When the match field represents a self match, the corresponding match field is the self-match field.

In a possible implementation, the determining a source data block to which a string associated with the match field belongs includes: when the match field represents an old match, determining the source data block from the second program file; or when the match field represents a self match, determining the source data block from the intermediate file obtained in the process of generating the first program file.

In other words, when the data block to which the string associated with the match field belongs is determined, a file to which the data block associated with the match field belongs may be determined based on a type of the match field.

In a possible implementation, before the reading the source data block to the RAM, the method further includes: when a quantity of source data blocks in the RAM exceeds a first threshold, replacing, with the source data block, a source data block that is not used for the longest time in the RAM.

In other words, because the RAM is limited, the quantity of data blocks loaded in the RAM cannot exceed the specified threshold. If the specified threshold is reached, a data block in the RAM needs to be replaced. Based on I/O overheads of reading the data block to the RAM, there is a low probability that a data block that is not used for the longest time in the RAM participates in matching again. Therefore, a strategy for replacing the data block in the RAM may be replacing a data block that is not used for the longest time in the RAM each time.

According to a second aspect, this application provides a program update method, applied to a server. The method includes: obtaining a first program file and a second program file of a target program, where the target program is a program that needs to be upgraded on an electronic device, the first program file and the second program file are program files of different versions of the target program, and a version of the first program file is later than a version of the second program file; determining a match sequence and a non-match data stream based on match costs, non-match costs, and load costs of data in the first program file and the second program file, where the load cost is a cost of reading data in the second program file when the first program file is generated on the electronic device or a cost of obtaining data in an intermediate file in a process of generating the first program file on the electronic device, the match sequence includes a match field and a non-match field, the match field indicates that a string in the first program file matches a string other than a first string in the first program file or a string in the second program file, and the non-match field indicates that a string in the first program file is the same as a string in the non-match data stream; and generating an upgrade package of the target program based on the match sequence and the non-match data stream, where the upgrade package indicates a difference between the first program file and the second program file.

In this solution, the server generates the upgrade package of the target program based on the first program file and the second program file of the target program. In a process of generating the upgrade package, the first program file may be indicated in a manner of the match sequence and the non-match data stream. In a process of generating the match sequence and the non-match data stream that indicate the first program file, when calculating the match cost of the string in the first program file, the load cost of reading the data in the second program file when the first program file is generated on the electronic device or the data in the intermediate file obtained in the process of generating the first program file may be included in the match cost. In this way, an optimal matching result can be obtained, optimization of a quantity of data block loading times is ensured, and a differential rate and an I/O count can be finely balanced.

In a possible implementation, the match costs of the data in the first program file and the second program file include an old-match cost and a self-match cost, where the old-match cost is a cost of finding, for a string in the first program file, another matched string in the second program file, and the self-match cost is a cost of finding, for a string in the first program file, another matched string other than the first string in the first program file.

In other words, when matching is performed on the data in the first program file, the matching includes performing matching (namely, an old match) on the string in the first program file with the string in the second program file, and matching (a self match) on the string in the first program file with another string in the first program file. Therefore, when the match cost of the string in the first program file is calculated, the old-match cost and the self-match cost are calculated.

In a possible implementation, the determining a match sequence and a non-match data stream based on match costs, non-match costs, and load costs of data in the first program file and the second program file of the target program includes: obtaining at least one matching overhead based on match costs, non-match costs, and load costs of the data in the first program file and the second program file in different matching manners; and selecting a lowest matching overhead from the at least one matching overhead, and determining the match sequence and the non-match data stream of the first program file based on a match cost, a non-match cost, and a load cost that correspond to the lowest matching overhead.

In other words, matching overheads in the different matching manners may be separately calculated, and the match cost, the non-match cost, and the load cost corresponding to the lowest matching overhead are selected to determine the match sequence and the non-match data stream of the first program file. This can ensure that the generated match sequence of the first file is an optimal match sequence.

According to a third aspect, this application provides an electronic device, including:

at least one memory, configured to store a program; and
at least one processor, configured to execute the program stored in the memory, and when the program stored in the memory is executed, the processor is configured to perform the method according to the first aspect or any one of the possible implementations of the first aspect.

According to a fourth aspect, this application provides a server, including:

at least one memory, configured to store a program; and
at least one processor, configured to execute the program stored in the memory, and when the program stored in the memory is executed, the processor is configured to perform the method according to the second aspect or any one of the possible implementations of the second aspect.

According to a fifth aspect, this application provides a computer storage medium. The computer storage medium stores instructions, and when the instructions are run on a computer, the computer is enabled to perform the method according to any one of the possible implementations of the first aspect or the second aspect.

According to a sixth aspect, an embodiment of this application provides a computer program product including instructions. When the instructions are run on a computer, the computer is enabled to perform the method according to any one of the possible implementations of the first aspect or the second aspect.

## BRIEF DESCRIPTION OF DRAWINGS

The following briefly describes accompanying drawings used in describing embodiments or the conventional technology.

FIG. 1 is a diagram of a system update process on a device according to an embodiment of this application;
FIG. 2 is a schematic flowchart of general differential upgrade according to an embodiment of this application;
FIG. 3 is a diagram of an upgrade scenario of a terminal device according to an embodiment of this application;
FIG. 4 is a diagram of a hardware structure of a server according to an embodiment of this application;
FIG. 5 is a diagram of a structure of a terminal device according to an embodiment of this application;
FIG. 6 is a diagram of a new file indication process according to an embodiment of this application;
FIG. 7 is a diagram of a matching manner according to an embodiment of this application;
FIG. 8 is a diagram of another matching manner according to an embodiment of this application;
FIG. 9 is a diagram of a generation principle of a new file according to an embodiment of this application;
FIG. 10 is a diagram of a process of generating a new file in a RAM according to an embodiment of this application;
FIG. 11 is a schematic flowchart of a program update method according to an embodiment of this application; and
FIG. 12 is a schematic flowchart of another program update method according to an embodiment of this application.

## DESCRIPTION OF EMBODIMENTS

To make objectives, technical solutions, and advantages of embodiments of this application clearer, the following describes the technical solutions in embodiments of this application with reference to accompanying drawings.

In descriptions of embodiments of this application, any embodiment or design scheme described as "example", "for example", or "in an example" should not be understood as being more preferred or having more advantages than another embodiment or design scheme. Exactly, use of the words such as "example", "for example", "in an example" is intended to present a relative concept in a specific manner.

Moreover, terms "first" and "second" are merely intended for description, and shall not be understood as an indication or implication of relative importance or implicit indication of an indicated technical feature. Therefore, a feature limited by "first" or "second" may explicitly or implicitly include one or more features. Terms "include", "have", and their variants all mean "include but are not limited to", unless otherwise specifically emphasized in another manner.

Before this solution is described, technical terms in this solution are described first.

Rich device: is a resource device with sufficient random access memory (random access memory, RAM) and central processing unit (Central Processing Unit, CPU) resources, for example, a smartphone or a smartwatch.

Thin device: is a terminal device with limited resources, for example, a band or a sports watch.

Matching: A segment of continuous data finds a same or similar segment from a same source, where same is referred to as perfect matching. "Matching" in embodiments of this application means the perfect matching.

LZ77 algorithm: LZ77 is a byte-based general compression algorithm. A principle of the algorithm is replacing a duplicate byte (namely, the duplicate byte in the foregoing text) in a source file with a triplet (distance, length, and nextchar). The distance indicates a distance between a to-be-matched current character and a first letter of a matched string, the length indicates a length of the matched string, that is, a quantity of characters that match the foregoing text, and the nextchar indicates a next character of the current matched string. Usually, a general compressor follows more than one char after a match, but a string of chars is used as literal.

The following describes this solution.

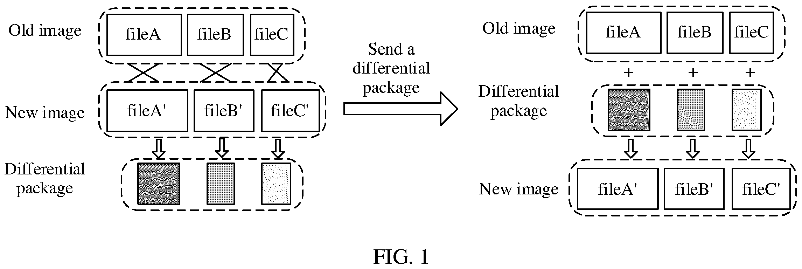

System or program upgrade of a device needs to download an upgrade package from a server, and execute an upgrade program on the device based on the downloaded upgrade package. A size of the upgrade package directly affects traffic costs, user experience, a development cycle, and the like of the system or the program on the device in an upgrade process. For example, FIG. 1 shows a system update process on a device. As shown in FIG. 1, after specifying, developing, and generating a new image for the device, a development department enters a package making process. The package making process occurs on a server. A package making tool on the server makes a corresponding differential package for each pair of old and new image files based on an old image file on the device stored on the server and a new image file that needs to be upgraded on the device. Then, a plurality of generated differential packages are packaged together and sent to the device. The differential package is a part that is different between the new image file and the old image file. After receiving the differential package sent by the server, the device generates the new image file based on the old image file and the differential package on the device, and updates the system on the device based on the generated new image file.

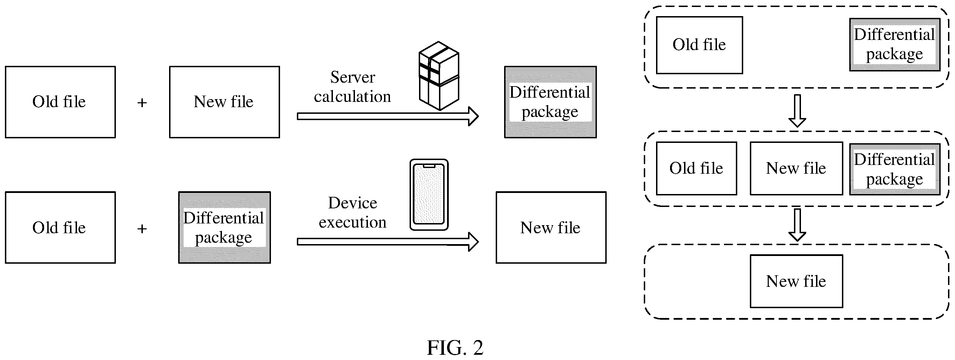

Existing device upgrade is mainly performed by using the differential package. In a differential upgrade process, differential upgrade tools of an operating system and software split a large software system into a plurality of binary files that need to be updated by performing steps such as parsing and pairing, and then invoke a general differential algorithm. For example, FIG. 2 is a schematic flowchart of general differential upgrade. As shown in FIG. 2, old and new binary files with similar content are given. An objective of a general differential algorithm is to calculate an "increment" of the file of the new version relative to the file of the old version, that is, perform "old file+new file-differential package". An objective of a restoration algorithm is to use the old file on the device, and the received differential package to generate the new file, namely, "old file+differential package-new file". For example, Table 1 shows some commonly used differential algorithms.

**Table 1**

| Differential method | Type | Feature |
| --- | --- | --- |
| imagediff | System image upgrade tool | Parse and differentiate by file and block (block) |
| archive-patcher | Application package upgrade tool | Parse, decompress, and differentiate by file |
| bsdiff | General differential algorithm | Optimal differential rate, high speed, and high resource overheads |
| Gdelta | General differential algorithm | High speed and a differential rate that needs to be improved |
| Rock | General differential algorithm | Differential upgrade performed on a thin device, but a poor differential rate and a poor update rate |

In the process of performing upgrade by using the differential package, a measurement standard of a used general differential algorithm mainly includes: (1) a size of the differential package, (2) a rate at which the new file is generated based on the differential package on the device, (3) resource overheads for generating the new file, and (4) a rate at which the differential package is generated on the server. Based on the measurement standard of the general differential algorithm, the bsdiff and Rock algorithms may be used to upgrade software on rich devices such as a PC and a smart device.

bsdiff is a general byte (byte)-granularity general binary file differential algorithm that indicates the new file as a sequence of ADD and INSERT operations. ADD(p, k) indicates that k bytes are copied from a p location of the old file to a current location of the new file, and INSERT(j) indicates that j bytes are copied from an extra stream to the current location. In addition, bsdiff allows non-perfect matching, that is, a modification required by a field of the ADD operation is recorded separately. For example, DIFF(5, 'a') indicates that a fifth byte of the new file is modified to 'a'. A differential package obtained by using bsdiff usually includes the following parts: (1) the sequence formed by ADD and INSERT, (2) a sequence formed by DIFF, and (3) the extra data stream. The three parts are compressed and packaged by a compressor with an excellent compression ratio.

It may be understood that a manner of obtaining a match by bsdiff is to construct a suffix array, scan the new file from front to back, and search for a longest match for each byte. When a difference byte at a location exceeds a specific proportion, a match is output. However, the match may not be perfect, and a difference needs to be provided by the extra DIFF data stream. Therefore, the location at which bsdiff finds the match may be arbitrary.

In a process of upgrading the software on the device, the software on the device can be upgraded by using bsdiff. However, in a process in which bsdiff generates the differential package, to reduce a size of the generated differential package, bsdiff needs to rely on a black-box compression algorithm, which increases complexity of bsdiff and causes poor scalability of bsdiff. In addition, in the process in which bsdiff generates the new file based on the differential package and the old file, a manner in which the match is formed is greedy in a specific manner. Although bsdiff works for most data, it is difficult for bsdiff to adapt to another system or improve.

Differential calculation can be performed on the new file and the old file on the server (server) end by using Rock to obtain the differential package. In addition, differential update can also be completed by using Rock based on the differential package on a device whose RAM is only dozens of KB. Although the differential update can be completed on the small RAM by using Rock, there are still problems of a loss of a differential rate and large restoration time overheads in a process of performing the differential update by using Rock.

Kernel algorithms of software on rich devices such as a computer and a smart device are fixed. However, a differential method in an upgrade process of a resource-limited scenario on a thin device still needs to be improved. The existing thin device faces strict resource limitations during software upgrade. For example, (1) Only a small amount of memory of a RAM on the thin device can be used, about 100 KB, (2) a calculation capability of the thin device is much lower than that of the smart device, and some thin devices do not have CPUs but only MCUs (dominant frequency: 100 MHz), and (3) a size of a read-only memory (read-only memory, ROM) on the thin device is sufficient, but read/write performance is poor with random read taking about 2 ms. Due to these limitations, commonly used differential upgrade methods like bsdiff cannot run on the thin device. Currently, a used update method is either an inefficient algorithm like Rock, or performing full update. As a result, when a user upgrades the system or the program, it takes dozens of minutes to transmit the upgrade package and perform an update operation. As user experience requirements on the thin device increase, applications increase, and functions become more complex, the size of the upgrade package becomes increasingly large. Time-consuming upgrade of the device becomes a pain point in use of the terminal product. A watch product is used as an example. Table 2 shows time consumed for upgrading the watch product in different manners.

**Table 2**

| Upgraded version | Transmission manner | Mobile phone model | Watch model | Package size | Transmission duration | Transmission rate | Installation duration |
|---|---|---|---|---|---|---|---|
| M01↓M03 | Wi-Fi | M20 Pro | G3 | 153 MB | 4m and 20s | 603 KB/s | 6m and 18s |
| | Bluetooth | X30 Max | G3 | 153 MB | 16m and 17s | 160 KB/s | 6m and 15s |
| | BLE | iP xr | G3 | 153 MB | 89m and 54s | 29 KB/s | 6m and 17s |
| M02↓M03 | Wi-Fi | M20 Pro | G3 | 127 MB | 3m and 49s | 570 KB/s | 5m and 8s |
| | Bluetooth | X30 Max | G3 | 127 MB | 14m and 21s | 151 KB/s | 5m and 12s |
| | BLE | iP xr | G3 | 127 MB | 75m and 12s | 28 KB/s | 5m and 22s |
| SPM01↓M03 | Wi-Fi | M20 Pro | G3 | 127 MB | 4m and 45s | 458 KB/s | 7m and 2s |
| | Bluetooth | X30 Max | G3 | 127 MB | 23m and 31s | 92 KB/s | 7m and 2s |
| | BLE | iP xr | G3 | 127 MB | 73m and 39s | 29 KB/s | 7m and 1s |

As shown in the data in Table 2, during the upgrade of the G3 watch, data transmission takes four minutes to 90 minutes, installation takes about six minutes, and the upgrade takes 10 minutes to 96 minutes in total. A conventional differential upgrade algorithm cannot be used on a wearable device whose RAM is limited. Therefore, upgrade duration of an existing wearable device is long, and user upgrade experience is poor.

In view of this, embodiments of this application provide a program update method, where a new file is indicated as a sequence of "old match+self match+non match", and the sequence is recorded in an extended LZ77 manner. Then, when a new file is generated on a terminal device, an old file stored in the terminal device and the new file that is generated are split into different blocks (block). When data at a location in the new file or the old file needs to be read, a block corresponding to the data segment is read to a RAM. When the new file generated in the RAM meets a block size, the generated block that belongs to the new file may be written to a ROM. In a process of generating the new file on the terminal device, the file required for generating the new file is stored in the RAM in a unit of the block, thereby reducing a demand for the RAM on the terminal device during file update.

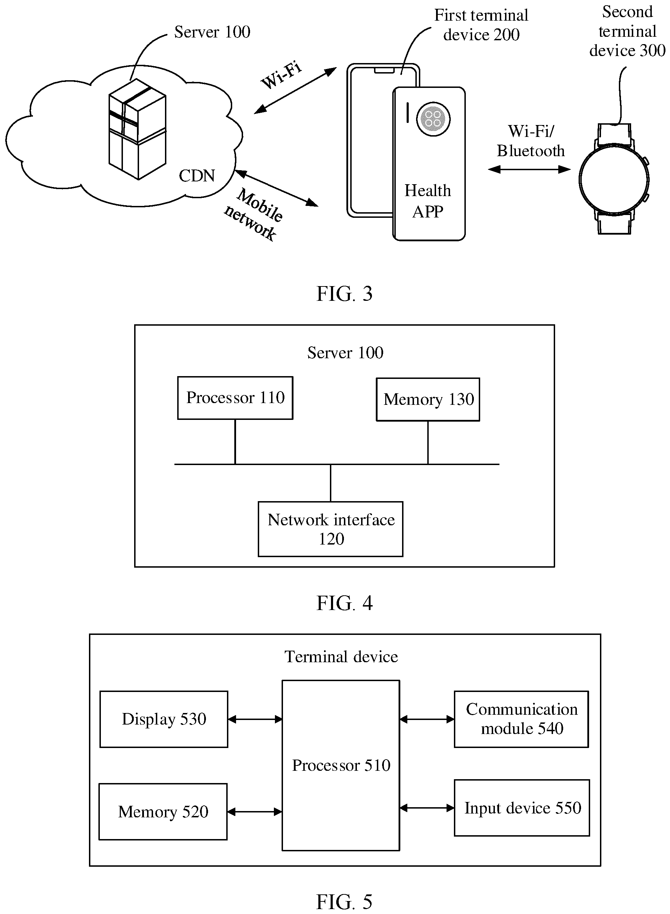

For example, FIG. 3 is a diagram of an upgrade scenario of a terminal device according to an embodiment of this application. As shown in FIG. 3, a server 100, a first terminal device 200, and a second terminal device 300 that are deployed in a content delivery network (content delivery network, CDN) are included. The first terminal device 200 may be a rich device, for example, a smartphone. The second terminal device 300 may be a thin device, for example, a sports watch. The sports watch communicates with the smartphone through Wi-Fi and Bluetooth, and the smartphone may communicate with the server in the CDN through Wi-Fi and over a mobile network. When a system or software in the sports watch needs to be upgraded, an installation package corresponding to the system or software that needs to be upgraded may be downloaded from the server in the CDN by using the smartphone. Then, the smartphone upgrades the sports watch by using an app (for example, a health app) corresponding to the sports watch on the smartphone. It may be understood that the device upgrade scenario shown in FIG. 3 is merely an example of an application scenario in this embodiment of this application. In actual application, more or fewer devices than those in FIG. 3 may be included. For example, when the sports watch in FIG. 3 needs to be upgraded, a differential package required for the upgrade may be directly downloaded from the server in the CDN network.

Next, hardware structures of the server and the terminal device in the device upgrade scenario shown in FIG. 3 are described.

For example, FIG. 4 is a diagram of a hardware structure of a server. As shown in FIG. 4, the server 100 may include a processor 110, a network interface 120, and a memory 130. The processor 110, the network interface 120, and the memory 130 may be connected through a bus or in another manner.

In this embodiment of this application, the processor 110 (or referred to as a central processing unit (central processing unit, CPU)) is a computing core and a control core of the server 100.

The network interface 120 may include a standard wired interface and a wireless interface (such as WI-FI and a mobile communication interface), and is configured to receive and send data under control of the processor 110, for example, receive data request information sent by the first terminal device 200 or the second terminal device 300, and send a data packet to the first terminal device 200 or the second terminal device 300.

The memory (memory) 130 is a storage device of the server 100, and is configured to store a program and data, for example, store an old file and a new file corresponding to a system or software in the first terminal device 200 or the second terminal device 300.

It may be understood that the structure shown in FIG. 3 in this embodiment of this application does not constitute a specific limitation on the server 100. In some other embodiments of this application, the server 100 may also be a cloud server. The server 100 may include more or fewer components than those shown in the figure, a combination of some components, or splits from some components, or a different component layout. The components shown in the figure may be implemented by hardware, software, or a combination of software and hardware.

For example, FIG. 5 is a diagram of a structure of a terminal device. It may be understood that the terminal device may be the first terminal device 200 or the second terminal device 300 in FIG. 3, and the terminal device may be but is not limited to an electronic device like a mobile phone, a tablet computer, a notebook computer, a wearable device, or a smart television. An example embodiment of the terminal device includes but is not limited to an electronic device running iOS, Android, Windows, HarmonyOS (HarmonyOS), or another operating system. A type of the terminal device is not specifically limited in this embodiment of this application.

As shown in FIG. 5, the terminal device includes a processor 510, a memory 520, a display 530, a communication module 540, and an input device 550. The processor 510, the memory 520, the display 530, the communication module 540, and the input device 550 may be connected through a bus or in another manner.

The processor 510 is a computing core and a control core of the terminal device, and the processor 510 may include one or more processing units. Different processing units may be independent components, or may be integrated into one or more processors.

The memory 520 may store a program, and the program may be run by the processor 510, so that the processor 510 performs some or all methods that need to be performed by the terminal device provided in this embodiment of this application. The memory 520 may further store a file corresponding to a system or an application on the terminal device. The processor 510 may read data stored in the memory 520. The memory 520 and the processor 510 may be disposed separately. Optionally, the memory 520 may alternatively be integrated into the processor 510.

The display 530 is configured to display an image, a video, and the like.

The communication module 540 may include a mobile communication module. When the communication module 540 is the mobile communication module, the communication module 540 may provide a wireless communication solution that includes 2G/3G/4G/5G or the like and that is applied to the terminal device. For example, the communication module 540 may be configured for the terminal device to communicate with a server or another terminal device, to obtain a to-be-updated update package of a system or software on the terminal device.

In some embodiments, the terminal device may further include the input device 550. The input device 550 may be configured to input information to the terminal device and/or deliver a control instruction to the terminal device. For example, the input device 550 may be, but is not limited to, a mouse, a keyboard, or the like.

It may be understood that the structure shown in FIG. 5 in this embodiment of this application does not constitute a specific limitation on the terminal device. In some other embodiments of this application, the terminal device may include more or fewer components than those shown in the figure, a combination of some components, or splits from some components, or a different component layout. The components shown in the figure may be implemented by hardware, software, or a combination of software and hardware.

Next, the server and the terminal device shown in FIG. 4 and FIG. 5 are used as examples to describe a file update process provided in embodiments of this application, including a process of generating, on the server, a differential package of a to-be-updated file, and a process of generating, on the terminal device, a new file of the to-be-updated file based on the differential package of the to-be-updated file. The file update process in embodiments of this application mainly relates to processing at a server end and a terminal device end.

(1) Generate the differential package of the to-be-updated file

In embodiments of this application, the to-be-updated file is mainly a file corresponding to a system or software that needs to be updated in the terminal device. Before the system or software in the terminal device is updated, the differential package of the to-be-updated system or software needs to be generated at the server end.

An "old file" corresponding to the to-be-updated system or software on the terminal device and a "new file" used to update the system or software on the terminal device are pre-stored on the server side. It may be understood that, in embodiments of this application, the "old file" is a file corresponding to a system or software currently running on the terminal device, and the "new file" is a file used to update the system or software running on the terminal device. For example, if a version of the system running on the terminal device is 2.0, the system running on the terminal device needs to be upgraded to a version 3.0. A file corresponding to the system version 2.0 is the old file, and a file corresponding to the system version 3.0 is the new file.

When generating the differential package of the to-be-updated system or software, the server first needs to obtain the old file and the new file of the to-be-updated system or software. Then, the server matches the obtained old file with the new file, to generate the differential package of the to-be-updated system or software on the terminal device. Specifically, the server matches the new file with the old file, and the new file with the new file, to indicate the new file in a manner of "old match+self match+non match". The old match is forming a dictionary by using all strings in the old file, matching characters in the new file with the characters in the old file, and recording a location of a matched character in the old file. The self match is matching a byte that needs to be matched in a current location in the new file with a byte that is matched in the foregoing text, and if the matching succeeds, recording a location at which the currently matched character appears in the foregoing text. The non match is that there is a string that exists in the new file and that matches neither the string in the old file nor another string in the new file.

In a possible example, $S[i,j]$ indicates that a string $S$ ranges from an $i^{th}$ to a $j^{th}$ byte (byte), where the $i^{th}$ byte is included but the $j^{th}$ byte is not included. It is assumed that the old file is indicated as $S$ by byte, and a length is L_load bytes. The new file is indicated as $T$, and a length is L_new bytes. The "old match+self match+non match" may be indicated by a triplet M, where M=(type, distance, length). The type $\in$ {old_match, self_match, non_match} is an enumerated type, and the distance and length are integers. It is assumed that a location currently processed by the new file is t. For the old match, M_old=(type=old_match, distance, length) indicates that $S[t\text{-}distance, t\text{-}distance+length]$ is exactly the same as $T[t, t+length]$. For the self match, M_self=(type=self_ match, distance, length) indicates that $T[t\text{-}distance, t\text{-}distance+length]$ is exactly the same as $T[t, t+length]$. For the non match, M_non=(type=non_match, distance=none, length) indicates that $T[t, t+length]$ needs to be read from an extra new data stream Literal. In this case, distance is meaningless. In the foregoing indication methods, the new file $T$ may be completely restored by adding $S$, an operation sequence M={M1, M2, ..., Mn}, and Literal. The differential package includes the operation sequence $\mathcal{M}$ and the non-match stream literal.

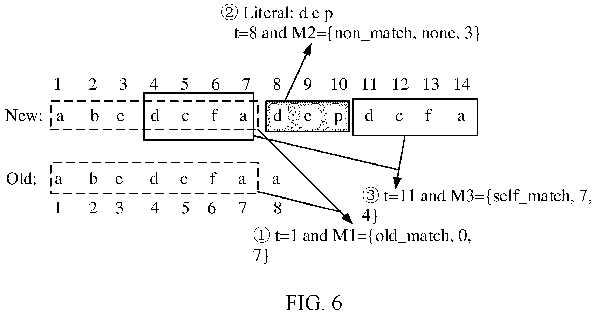

In a possible example, FIG. 6 shows a new file indication process, that is, a process of indicating the new file in the manner of "old match+self match+non match". As shown in FIG. 6, the new file includes characters "abedcfadepdcfa", and characters in the old file are "abedcfaa". When the new file is matched with the old file, the matching starts from a first character (that is, t=1), and it can be learned through the matching that characters from t=1 to t=7 in the new file match characters from t=1 to t=7 in the old file. Therefore, the characters from t=1 to t=7 in the new file may be indicated as M1= {old_match, 0, 7}. Then, the server continues to perform matching from an eighth character in the new file. It can be learned through the matching that neither the characters in the old file nor the characters from t=1 to t=7 in the new file have characters that match characters from t=8 to t=10. In this case, the characters (d e p) from t=8 to t=10 may be used as the new data stream Literal, and the characters from t=8 to t=10 are indicated as M2={non_match, none, 3}. The server continues to perform matching from an 11th character in the new file, and it can be learned through the matching that characters from t=11 to t=14 match the characters from t=4 to t=7 in the old file. The characters from t=11 to t=14 in the new file are indicated as M3={old_match, 7, 4}.

It may be understood that, in a process of matching the new file with the old file, a size of the operation sequence generated through the matching and a quantity of operation sequences are closely related to a size of the generated differential package, and when the new file is matched with the old file, the string that can be matched with the to-be-matched string in the new file is not unique. For example, in FIG. 6, the characters from t=11 to t=14 in the new file match both the characters from t=4 to t=7 in the old file and characters from t=4 to t=7 in the new file. However, when the operation sequence in the differential package is generated, a matched string may be selected, by calculating an optimal match, from a plurality of strings that match the current location.

When the optimal match is calculated, for a segment of input data input[0..n], where a 0th byte is included but an nth byte is not included, S[n] indicates a shortest length S[n] obtained by encoding input[0..n] in an LZ77 manner. When the old file is not introduced for the matching, a calculation manner of S[n] may be recursively expressed as:

$$S[n] = \min_{0 \leq m \leq n-1} \begin{cases} S[m] + literal\_price(input[m, n]) \\ S[m] + match\_price(distance, n - m) \end{cases}$$

where m is an enumerated variable range from 0 to n-1 and indicates a start location of a last match, *literal_price*(*input*[*m, n*]) is a cost of input[m..n] in the non match, and *match_price*(*distance, n - m*) is a cost of input[m..n] when a match is found at a distance forward. The costs of the two manners are estimated by given manners. S[m] indicates representation costs from 0th to (m-1)th characters.

When the old file is introduced for the matching, the calculation manner of S[n] may be recursively expressed as:

$$S[n] = \min_{0 \leq m \leq n-1} \begin{cases} S[m] + literal\_price(input[m, n]) \\ S[m] + self\_match\_price(distance, n - m) \\ S[m] + old\_match\_price(pos, n - m) \end{cases}$$

where m is the enumerated variable range from 0 to n-1 and indicates the start location of the last match, *literal_price*(*input*[*m, n*]) is the cost of input[m..n] in the non match, *self_match_price*(*distance, n - m*) is the cost of input[m..n] when the match is found at a distance forward, *old_match_price*(*pos, n - m*) is a cost of input[m..n] when a match is found at a POS location of the old file, and S[m] indicates the representation costs from the 0th to (m-1)th characters.

In embodiments of this application, the terminal device needs to split the old file and the generated new file into blocks based on a fixed length. When generating the new file of the to-be-updated system or software based on the differential package of the to-be-updated system or software received from the server and the old file on the terminal device, the terminal device needs to read data in a location of the file. In this case, the terminal device loads a block corresponding to the data segment to a RAM, to reduce a requirement for the block on the terminal device. However, when the block is read, a location relationship between a block read each time and a block read last time is different, and costs are also different. Therefore, to further reduce I/O overheads when the new file is generated on the terminal device, extra loading overheads may be further introduced when the optimal match is calculated.

When the loading overheads on the terminal device are introduced, the calculation manner of S[n] may be recursively expressed as:

$$S[n] = \min_{0 \leq m \leq n-1} \begin{cases} S[m] + literal\_price(input[m, n]) \\ S[m] + self\_match\_price(distance, n - m) + self\_reload\_cost \\ S[m] + old\_match\_price(pos, n - m) + old\_reload\_cost \end{cases}$$

where m is the enumerated variable range from 0 to n-1 and indicates the start location of the last match, *literal_price*(*input*[*m, n*]) is the cost of input[m..n] in the non match, *self_match_price*(*distance, n - m*) is the cost of input[m..n] when the match is found at a distance forward, *old_match_price*(*pos, n - m*) is the cost of input[m..n] when the match is found at the POS location of the old file, and S[m] indicates the representation costs from the 0th to (m-1)th characters.

If a block in the RAM is referred to as a cache block, a reload_cost item is determined by whether the block is the cache block and a sequence number of the cache block that is recently read, and a value of reload_cost is equivalent to a quantity of bytes after compression. For example, a cost of reading data from an unloaded block may be set to 20 bytes, and a cost of reading data from a loaded block is 0.1r bytes, where r indicates a sequence number of the block that is recently read. A match may be accepted only when a benefit of the match is greater than 20 bytes.

In a process of calculating the optimal match, the loading overheads on the terminal device are introduced to intuitively remove a large quantity of fragmented and scattered matches, and a complete match or a match in the cache block is used.

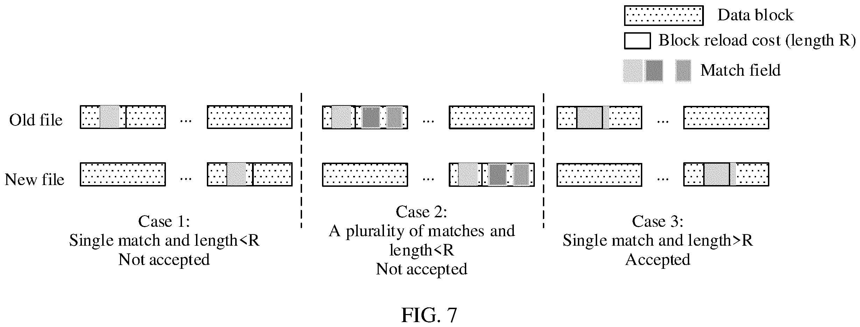

For example, FIG. 7 shows a matching manner. When a candidate match is not in the cache block, the candidate match is accepted only after a match length reaches reload cost. As shown in FIG. 7, for a case 1, if there is only one candidate match in blocks of the new file and the old file, and a length is less than a threshold R, the candidate match is not accepted. For a case 2, if there are three candidate matches in the blocks of the new file and the old file, but lengths of the three candidate matches are all less than the threshold R, the candidate matches in the blocks are not used. For a case 3, if there is only one candidate match in the blocks of the new file and the old file, and a length is greater than the threshold R, the candidate match is accepted.

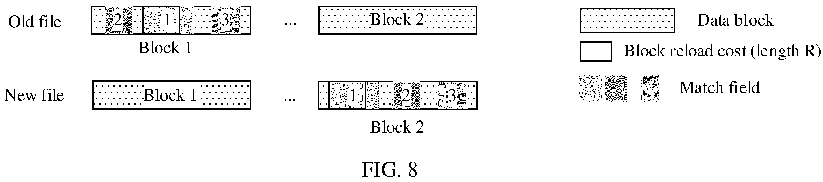

After a match is accepted, a corresponding block becomes the cache block when match restoration is performed. Therefore, matches in the block are not limited by the reload cost threshold. As shown in FIG. 8, a candidate match 1 in a block 1 in the old file matches a candidate match 1 in a block 2 in the new file, and a length of the candidate match 1 is greater than R. Therefore, the block 1 is read to the RAM and becomes the cache block. If a candidate match 2 and a candidate match 3 in the block 1 respectively match a candidate match 2 and a candidate match 3 in a block 2, whether lengths of the candidate match 2 and the candidate match 3 are greater than R does not need to be considered, and the candidate match 2 and the candidate match 3 are definitely accepted.

After the operation sequence $\mathcal{M}$ and the non-match stream literal are obtained on the server, entropy encoding and block splitting and packaging further need to be performed on the obtained operation sequence $\mathcal{M}$ and the non-match stream literal, to obtain the differential package of the to-be-updated system or software on the terminal device.

(2) Generate the new file based on the differential package of the to-be-updated file

After receiving the differential package that is of the to-be-updated system/software and that is sent by the server, the terminal device needs to generate the new file of the to-be-updated system or software based on the received differential package and the old file that is of the to-be-updated system or software and that is stored on the terminal device.

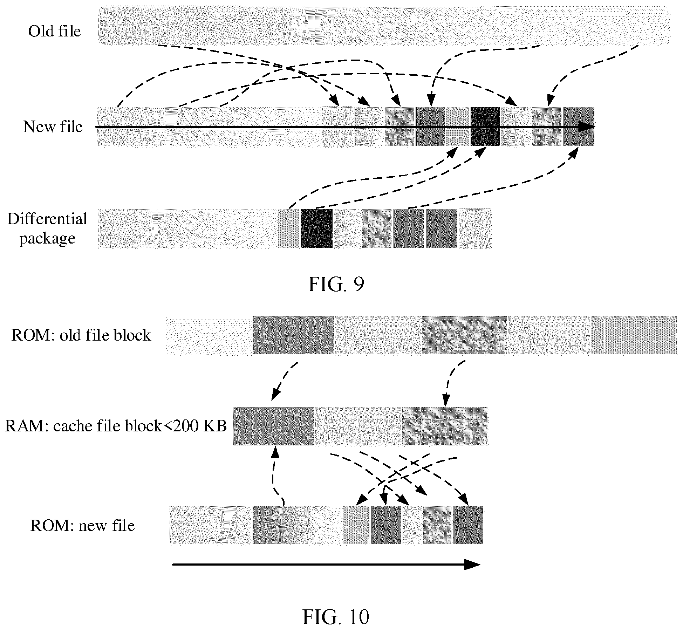

For example, FIG. 9 is a diagram of a generation principle of the new file. As shown in FIG. 9, after decoding the differential package, the terminal device sequentially reads the operation sequence $\mathcal{M}$ and the non-match stream literal in the differential package. Then, the terminal device matches corresponding data from the old file or the new file based on the operation sequence $\mathcal{M}$, and uses the matched data to generate the new file, or the terminal device obtains corresponding data from the non-match stream literal based on the operation sequence $\mathcal{M}$ to generate the new file.

Usually, when the terminal device generates the differential package of the to-be-updated system or software based on the differential package and the old file, a most direct operation method is to load the old file and the differential package to the RAM, and write the new file back to the ROM after the new file is generated in the RAM. Usually, a file brings matches with a quantity of $10^5 \sim 10^6$. If copying of all matches is directly operated on the RAM, the RAM needs to have a large capacity, and such a large quantity of matching operations causes high data reading time overheads. Therefore, in embodiments of this application, the old file and the generated new file are split into blocks based on a fixed length. In the matching process, the old and new files of the terminal device are split into the blocks, and only blocks of to-be-read and to-be-written data are loaded to the RAM. In addition, only a limited quantity of blocks are retained in the RAM. This maintains use of the RAM at a low level.

Specifically, the terminal device splits the stored old file of the to-be-updated system or software into a plurality of blocks based on the preset length. Usually, the length of the block may be set to 1 KB to 16 KB. Then, the terminal device decodes the received differential package, and sequentially reads the operation sequence $\mathcal{M}$ and the non-match stream literal in the differential package. After the terminal device obtains the operation sequence $\mathcal{M}$ and the non-match stream literal in the differential package, the terminal device obtains corresponding data from the old file, the non-match stream literal, or the generated new file based on information carried in the operation sequence $\mathcal{M}$, to generate the new file. The new file is generated in the RAM of the terminal device. When data is read to the RAM, a block corresponding to the data segment that needs to be read is read to the RAM. For the new file generated in the RAM, when a size of the generated new file is a block, the new file needs to be written to the ROM. For an end at which the new file is generated, only one block needs to be reserved in the RAM.

Because the RAM is limited, a quantity of blocks loaded in the RAM is limited (usually several to dozens of cache blocks). When the quantity of blocks in the RAM reaches an upper limit, the blocks in the RAM need to be replaced in a specific manner. For example, a replacement strategy may be replacing N blocks that are most frequently used in the RAM, and data and locations of blocks that are in the RAM and that are not replaced do not change in the RAM. It may be understood that the block that is read to the RAM is referred to as the cache block, and all blocks of the old file and blocks that are generated in the new file may be loaded as the cache blocks. During match calculation, it needs to be ensured that no block is omitted.

For example, FIG. 10 is a diagram of a process of generating the new file in the RAM, and shows storage locations of the old and new files and the cache blocks in the terminal device, and a data transfer method. As shown in FIG. 10, the old file blocks and the generated new file blocks are stored in the ROM. When generating the new file, the terminal device reads, from the ROM into the RAM, a block in which data that needs to be read is located. After the new file generated in the RAM meets a block size, the new file needs to be written back to the ROM.

It may be understood that match information and the non-match data stream in the differential package have an upper length limit during packaging, and are read in sequence. Therefore, after obtaining the differential package, the terminal device only needs to decode the current package to the RAM, and does not need to split the data in the differential packet into the blocks.

In a possible example, it is assumed that the old file that is of the to-be-updated system or software and that is stored in the terminal device is "abedcfaapcpdfd", the operation sequence carried in the differential package includes: M1= {old_match, 0, 7}, M2={non_match, none, 3}, M3={old_match, 7, 4}, and the non-match literal is "dep". The terminal device first splits the old file into two blocks, and a size of each block is seven bytes. Data included in a block 1 is "abedcfa", and data included in a block 2 is "apcpdfd". Then, the terminal device decodes the differential package to the RAM, and starts matching from a first byte of the new file, that is, t= 1. Specifically, the first operation sequence M1 in the differential package is parsed. Because the type in M1 is old_match, the distance is 0, and the length is 7, it indicates that first to seventh bytes in the old file match first to seventh bytes in the new file. Because the first to seventh bytes belong to the block 1, the data in the block 1 is read to the RAM, and the first to seventh bytes in the block 1 are matched to generate the first to seventh bytes of the new file. After the first to seventh bytes of the new file are obtained, because the size of the first to seventh bytes meets a block, the generated new file needs to be written to the ROM. t is updated to 8, and the terminal device continues to parse the second operation sequence M2. Because the type in M2 is non_match, the distance is none, and the length is 3, it indicates that eighth to 10th bytes in the new file need to be read from the new data stream Literal. Therefore, first three bytes are read from Literal in sequence as the eighth to 10th bytes of the new file. In this case, t is updated to 11, and the terminal device continues to parse the third operation sequence M3. Because the type in M3 is self_match, the distance is 7, and the length is 4, it indicates that the fourth to seventh bytes in the new file are the same as 11th to 14th bytes in the new file. The fourth to seventh bytes belong to the first block of the new file, and the first block is loaded to the ROM. In this case, the first block of the new file needs to be read from the ROM to the RAM, and the fourth to seventh bytes in the first block need to be matched to generate the 11th to 14th bytes of the new file.

In embodiments of this application, when the differential upgrade is performed on the system or software on the device, an upgrade process is in the RAM. To avoid reading all data to the RAM, the data blocks need to be split into the blocks, the block to which the required data belongs needs to be read to the RAM, and a block that is recently read is preferably read when reading the block of the old or new file, thereby reducing I/O overheads. It may be understood that the foregoing method is not only applicable to the differential upgrade scenario of the system or software on the device, but also applicable to another application scenario related to a storage device and a database.

In embodiments of this application, the differential upgrade package of the to-be-updated system or software on the terminal device is generated on the server side based on "old match+self match+non match", and in the match calculation process of generating the differential upgrade package, the cost of loading the block is included in a match cost. In this way, optimization of a quantity of data block loading times is ensured while optimizing the matching result, and a differential rate and an I/O count can be finely balanced. In the process in which the terminal device upgrades the to-be-updated system or software, the old and new files are split into the blocks, and only the blocks of the to-be-read and the to-be-written data are loaded to the RAM. In addition, only the limited quantity of blocks are reserved in the RAM. This maintains the use of the RAM at the low level.

Next, based on the file update process in the foregoing embodiments, a program update method provided in an embodiment of this application is described.

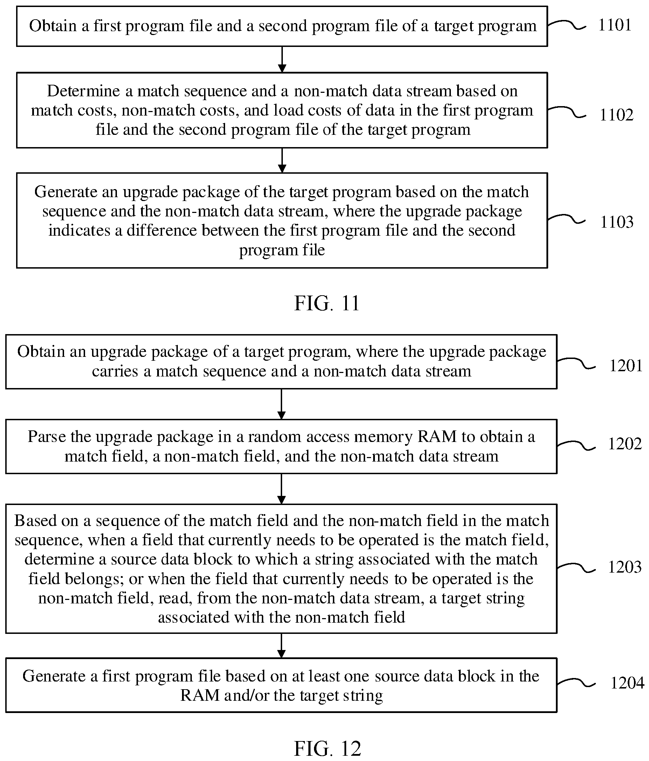

For example, FIG. 11 is a schematic flowchart of a program update method according to an embodiment of this application, and the method is mainly performed by the server in FIG. 3. As shown in FIG. 11, the method includes step 1101 to step 1103.

Step 1101: Obtain a first program file and a second program file of a target program.

In this embodiment, the target program is a software program that needs to be upgraded on an electronic device, the first program file and the second program file are program files of different versions of the target program, and a version of the first program file is later than a version of the second program file. For example, the first program file may be a file corresponding to the target program after upgrade, and the second program file is a file corresponding to the target software before upgrade. The second program file may be referred to as an old file, and the first program file may be referred to as a new file. The first program file and the second program file of the target program may be pre-stored in the server, or may be input by a user to the server in real time based on a requirement.

Step 1102: Determine a match sequence and a non-match data stream based on match costs, non-match costs, and load costs of data in the first program file and the second program file of the target program.

In this embodiment, the load cost is a cost of reading the data in the second program file when the first program file is generated on the electronic device or a cost of obtaining data in an intermediate file in a process of generating the first program file on the electronic device. The intermediate file obtained in the process of generating the first program file includes a file stored in a ROM and a file that is stored in a RAM and that belongs to the first program file. The match sequence includes a match field and a non-match field, the match field indicates that a string in the first program file matches a string other than a first string in the first program file or a string in the second program file, and the non-match field indicates that a string in the first program file is the same as a string in the non-match data stream.

After obtaining the first program file and the second program file of the target program, the server matches the first program file with the second program file, matches the data in the first program file with each other, indicates the first program file by using an "old match+self match+non match" sequence, and records the sequence in an extended LZ77 manner. Recording the sequence that indicates the new file in the extended LZ77 manner refers to indicating the string in the first program file by using a triplet operation sequence M, where M=(type, distance, length). The type $\in$ { old _match, self_match, non_match} is an enumerated type, and the distance and length are integers.

When matching is performed on the data in the first program file, for a same to-be-matched string, there may be a plurality of matching results or no matching result. For example, when matching is performed on the data in the first program file, it is assumed that a location currently processed by the first program file is t, where t is a natural number greater than or equal to 1. Data of a t+length length in the first program file may be matched with the data in the second program file, or may be matched with data before the location t in the first program file. If no string matching the string of the t+length length exists in the second program file and the data before the location t in the first program file, the data of the t+length length in the first program file may be stored in a new data stream.

When a plurality of matches exist in the data of the t+length length, match costs of matched data in the first program file may be determined by calculating match costs of strings and the load cost of the data when the first program file is generated on the electronic device. Different matching results correspond to different match costs of the matched data in the first program file. The second program file stored in the electronic device and the newly generated first program file are split into blocks on the electronic device. The load cost of the data when the first program file is generated on the electronic device refers to a cost of reading the block each time, the cost of reading a block is determined by whether the block is a cache block and a sequence number of the cache block that is recently read, and a value of the cost is equivalent to a quantity of bytes after compression. The match cost of the string includes an old-match cost and a self-match cost, where the old-match cost is a cost of finding, for a string in the first program file, another matched string in the second program file, and the self-match cost is a cost of finding, for a string in the first program file, another matched string other than the first string in the first program file.

In this embodiment of this application, when matching is performed on the string in the first program file, to ensure that a match cost in the match costs of the strings is lowest, an optimal match needs to be calculated. When the optimal match is calculated, the entire first program file is used as a whole for calculation. The match cost of the first program file may be identified by using a length S[n] that is of the first program file and that is indicated in the extended LZ77 manner. A calculation manner of S[n] may be recursively expressed as:

$$S[n] = \min_{0 \leq m \leq n-1} \begin{cases} S[m] + literal\_price(input[m,n]) \\ S[m] + self\_match\_price(distance, n-m) + \text{self\_reload\_cost} \\ S[m] + old\_match\_price(pos, n-m) + \text{old\_reload\_cost} \end{cases}$$

where m is an enumerated variable range from 0 to n-1 and indicates a start location of a last match, *literal_price*(*input*[*m, n*]) is a cost of input[m..n] in the non match, *self_match_price*(*distance, n - m*) is a cost of input[m..n] when a match is found at a distance forward, *old_match_price*(p*os, n - m*) is a cost of input[m..n] when a match is found at a POS location of the second program file, and S[m] indicates representation costs from 0$^{th}$ to (m-1)$^{th}$ characters.

If a block in the RAM of the electronic device is referred to as the cache block, a reload_cost item is determined by whether the block is the cache block and a sequence number of the cache block that is recently read, and a value of reload_cost is equivalent to a quantity of bytes after compression.

When the optimal match in the first program file is determined, a matched string corresponding to the lowest match cost among the plurality of match costs of the strings may be used as the optimal match. After the optimal matched string of the string in the first program file is obtained, the match sequence (which may also be indicated as the operation sequence $\mathcal{M}$) corresponding to the string in the first program file may be determined based on a program file to which the obtained optimal matched string belongs and a location relationship of the optimal matched string in the program file. In addition, the non-match data stream corresponding to the first program file may be generated based on an unmatched string in the first program file.

Step 1103: Generate an upgrade package of the target program based on the match sequence and the non-match data stream, where the upgrade package indicates a difference between the first program file and the second program file.

In this embodiment, after obtaining the match sequence and the non-match data stream that correspond to the first program file, the server may encode and split the obtained match sequence and non-match data stream to obtain the upgrade package of the target program.

In this embodiment of this application, in a process of matching the second program file with the first program file to generate the upgrade package, the load cost of the block when the second program file is generated on the electronic device is included in the match cost. In this way, optimization of a quantity of data block loading times is ensured while obtaining the optimal matching result, and a differential rate and an I/O count can be finely balanced.

For example, FIG. 12 is a schematic flowchart of a program update method according to an embodiment of this application. The method is mainly performed by an electronic device, and the electronic device may be the terminal device 1 or the terminal device 2 in FIG. 3. As shown in FIG. 12, the method includes step 1201 to step 1204.

Step 1201: Obtain an upgrade package of a target program, where the upgrade package carries a match sequence and a non-match data stream.

In this embodiment, the upgrade package indicates a difference between a first program file and a second program file. The match sequence includes a match field and a non-match field, the match field indicates that a string in the first program file matches a string other than a first string in the first program file or a string in the second program file, and the non-match field indicates that a string in the first program file is the same as a string in the non-match data stream. The first program file and the second program file are program files of different versions of the target program, and a version of the first program file is later than a version of the second program file. For example, the first program file may be a file corresponding to the target program after upgrade, and the second program file is a file corresponding to the target software before upgrade. The first program file may alternatively be referred to as an old file, and the second program file may be referred to as a new file. After the electronic device receives the upgrade package that is of the target program and that is sent by a server, the electronic device may directly decode the upgrade package into a RAM of the electronic device.

Step 1202: Parse the upgrade package in the random access memory RAM to obtain the match field, the non-match field, and the non-match data stream.

In this embodiment, the match sequence and the non-match data stream in the upgrade package have an upper length limit during packaging, and the match sequence and the non-match data stream in the upgrade package are read in sequence. Therefore, after receiving the upgrade package, the electronic device may directly decode the upgrade package into the RAM without causing excessively high overheads.

Step 1203: Based on a sequence of the match field and the non-match field in the match sequence, when a field that currently needs to be operated is the match field, determine a source data block to which a string associated with the match field belongs; or when the field that currently needs to be operated is the non-match field, read, from the non-match data stream, a target string associated with the non-match field.

In this embodiment, before the first program file corresponding to the target program is restored and generated on the electronic device, the electronic device further needs to split the second program file stored on the electronic device into a plurality of blocks based on a fixed length, where a length of the block may range from 1 KB to 16 KB, and in the process of generating the first program file corresponding to the target program, split an intermediate file obtained in the process of generating the first program file into a plurality of blocks. Because the RAM on the electronic device is limited, when generating the first program file, if the electronic device needs to read data at a specific location in the first program file or a specific piece of data in the intermediate file obtained in the process of generating the first program file, the electronic device only needs to read a block corresponding to the data segment to the RAM.

When generating the first program file of the target program, the electronic device may obtain, based on the match field in the match sequence carried in the upgrade package corresponding to the target program, target data for generating the first program file. The target data for generating the first program file may be data in the first program file, data in the second program file, and data in the new data stream. Specifically, the match sequence includes the match field and the non-match field. The match field and the non-match field each include a matching type, a data location, and a data length. The matching type includes an old match (old_match), a self match (self_match), and a non match (non_match), the matching type corresponding to the match field is the old match or the self match, and the matching type corresponding to the non-match field is the non match. The data location is used to identify a start location of the string associated with the match field in the first program file or the second program file. The data length is used to identify a length of the string associated with the match field.

When the field that currently needs to be operated is the match field, the electronic device determines, based on the sequence of the match field and the non-match field in the match sequence, the matching type of the match field. When the matching type is the old match, the target data block is determined from the second program file based on the data location and the data length in the match field. If the matching type is the self match, based on the data location and the data length in the match field, the target data block is determined from the intermediate file obtained in the process of generating the first program file, and the target data block is read to the RAM. It may be understood that, in the process in which the RAM generates the first program file, the intermediate file of the first program file generated in the RAM may be stored in the RAM, or may be written to a ROM.

When the field that currently needs to be operated is the non-match field, the target string associated with the non-match field is read from the non-match data stream. When the target string is obtained from the non-match data stream, data in the target string only needs to be obtained in sequence from the non-match data stream based on a length of the target string.

In a possible example, it is assumed that the length of the block is 16 KB, and the first program file matches a fifth character. If a match field in the upgrade package is M1={old_match, 0, 6}, it may be determined, based on M1, that the matching type is the old match, a start location of data that needs to be matched in the second program file is the fifth (5-0=5) character, and a length of the matched data is six characters. In this case, the electronic device needs to read a block to which fifth to 10th characters in the second program file belong to the RAM, where the fifth to 10th characters belong to a block 1 of the second program file. When the block 1 is not in the RAM, the block 1 needs to be read to the RAM.

If a non-match field in the upgrade package is M2={non_match, none, 2}, it may be determined, based on M2, that the matching type is the non match, and a length of data that needs to be obtained is two characters. In this case, the electronic device only needs to obtain two characters in sequence from the new data stream in the RAM as the data in the first program file, and delete the obtained string from the new data stream.

If a match field in the upgrade package is M3={ self_match, 2, 3}, it may be determined, based on M3, that the matching type is the self match, a start location of data that needs to be matched in the first program file is a third (5-2=3) character, and a length of the matched data is three characters. Third to fifth characters belong to a block 1 of the first program file. When the block 1 is not in the RAM, the block 1 in the first program file needs to be read to the RAM.

Step 1204: Generate the first program file based on at least one source data block in the RAM and/or the target string.

In this embodiment, generating the first program file in the RAM includes generating, in the RAM, the intermediate file of the first program file, and writing at least a part of data in the intermediate file to the read-only memory ROM, where the intermediate file of the first program file at least includes a part of data in the first program file. When the first program file is generated in the RAM of the electronic device, the data in the intermediate file of the generated first program file further needs to be split into the data blocks (block), where a size of the data block may be the same as a size of the source data block. If the data in the intermediate file of the first program file meets a block size, the block is write to the read-only memory ROM of the electronic device. In this way, only one block is reserved at an end at which the first program file is generated in the RAM.

Because a quantity of data blocks that can be stored in the RAM is limited, when the data block to which the target data belongs is read to the RAM, it needs to be determined whether data blocks stored in the RAM exceed a first threshold after the data block is read. When the quantity of data blocks in the RAM exceeds the first threshold, a data block that is not used for the longest time in the RAM may be replaced with the data block to which the target data belongs.

In this embodiment of this application, when upgrading the target software, the electronic device splits the second program file and the first program file into the blocks, and reads only blocks of to-be-read data and to-be-written data to the RAM, so that only a limited quantity of blocks are reserved in the RAM. This maintains use of the RAM at a low level.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially or completely performed based on an actual situation. This is not limited herein.

Next, the file update process in the foregoing embodiments is described by using system update on Huawei Watch G3 as an example. When the GT3 system is updated, differential package calculation may be completed on the electronic device, and a file restoration process may be tested on a development board of GT3. A maximum stack of the development board is 32 KB, and a maximum heap size is 256 KB. In a process of generating the differential package, a minimum matching length MIN_MATCH_LEN may be set to 5 when the differential package is generated, and a default encoding manner is finite state entropy (FSE). During file restoration, a block size BLOCK_LEN of old and new files is 4096, and a maximum quantity of blocks NUM _BUF _BLOCK that can be stored in a RAM is 8. File sizes corresponding to five pairs of old and new systems on GT3 are shown in Table 3.

**Table 3**

| File name | Old file size (byte) | New file size (byte) |
|---|---|---|
| glyphs.bin | 29929522 | 29930320 |
| prompt01.bin | 3964604 | 8347192 |
| prompt02.bin | 13034244 | 13034244 |

(continued)

| File name | Old file size (byte) | New file size (byte) |
|-----------|---------------------|---------------------|
| gui104.bin | 6656520 | 6691064 |
| gui109.bin | 6512912 | 6633816 |
| TOTAL | 60097802 | 64636636 |

Sizes of differential packages and time consumed for restoration that are obtained by using a conventional program update method are shown in Table 4.

**Table 4**

| File name | Size of a differential package (byte) | Restoration time (s) |
|-----------|--------------------------------------|---------------------|
| glyphs.bin | 9591781 | 1266 |
| prompt01.bin | 4391197 | 10.09 |
| prompt02.bin | 33149 | 13.10 |
| gui104.bin | 1373364 | 74.07 |
| gui109.bin | 695289 | 24.78 |
| TOTAL | 16084780 | 1388.04 |

Sizes of differential packages and time consumed for restoration that are obtained by using the program update method in embodiments of this application are shown in Table 5.

**Table 5**

| File name | Old file size (byte) | Restoration time (s) | Whether a restored file is correct |
|-----------|---------------------|---------------------|-----------------------------------|
| glyphs.bin | 2092768 | 29.65 | true |
| prompt01.bin | 3588750 | 8.85 | true |
| prompt02.bin | 733 | 5.68 | true |
| gui104.bin | 12657 | 2.50 | true |
| gui109.bin | 33672 | 2.28 | true |
| TOTAL | 5728580 | 48.96 | |

The time consumed for restoration refers to time consumed for obtaining the new file based on the old file and the differential package. It can be learned by comparing Table 4 and Table 5 that, according to the program update method in embodiments of this application, there are improvements in both the size of the differential package and the restoration time of the new file. The size of the differential package obtained by using the program update method in embodiments of this application is 35% of the size of the differential package obtained by using the conventional program update method, and the time required for restoration is 3.5% of the time required for restoration by using the conventional program update method.

Based on the method in the foregoing embodiments, an embodiment of this application provides a computer-readable storage medium. The computer-readable storage medium stores a computer program. When the computer program is run on a processor, the processor is enabled to perform method in the foregoing embodiments.

Based on the method in the foregoing embodiments, an embodiment of this application provides a computer program product. When the computer program product is run on a processor, the processor is enabled to perform the method in the foregoing embodiments.

The method steps in embodiments of this application may be implemented by hardware, or may be implemented by a processor executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information to the storage medium. Certainly, the storage medium may be a component of the processor. The processor and the storage medium may be located in an ASIC.

All or some of the foregoing embodiments may be implemented by software, hardware, firmware, or any combination thereof. When software is used to implement embodiments, all or some embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for distinguishing for ease of description and are not used to limit the scope of embodiments of this application.

**Claims**

1. A program update method, applied to an electronic device, wherein the method comprises:

obtaining an upgrade package of a target program, wherein the upgrade package carries a match sequence and a non-match data stream, the match sequence comprises a match field and a non-match field, the match field indicates that a string in the first program file matches a string in the first program file or a string in a second program file, the non-match field indicates that a string in the first program file matches a string in the non-match data stream, the first program file and the second program file are program files of different versions of the target program, and a version of the first program file is later than a version of the second program file;

parsing the upgrade package in a random access memory RAM to obtain the match field, the non-match field, and the non-match data stream;

based on a sequence of the match field and the non-match field in the match sequence, when a field that currently needs to be operated is the match field, determining a source data block to which a string associated with the match field belongs, and reading the source data block to the RAM, wherein the source data block is obtained by splitting the second program file or an intermediate file obtained in a process of generating the first program file; or when the field that currently needs to be operated is the non-match field, reading, from the non-match data stream, a target string associated with the non-match field; and

generating the first program file based on at least one source data block in the RAM and/or the target string.

2. The method according to claim 1, wherein the generating the first program file based on at least one source data block in the RAM and/or the target string comprises:

generating, in the RAM, the intermediate file of the first program file, and writing at least a part of data in the intermediate file to a read-only memory ROM, wherein the intermediate file of the first program file at least comprises a part of data in the first program file.

3. The method according to claim 2, wherein a size of the at least a part of data is the same as a size of the source data block.

4. The method according to claim 1, wherein the match field comprises an old-match field and a self-match field, the old-match field indicates that a string in the first program file matches another string in the second program file, and the self-match field indicates that a string in the first program file matches a string other than the first string in the first program file; and

the old-match field and the self-match field each further comprise a data location and a data length, wherein the data location is used to identify a start location, in the first program file or the second program file, of a string associated with a corresponding match field, and the data length is used to identify a length of the string associated with the corresponding match field.

5. The method according to claim 4, wherein the determining a source data block to which a string associated with the match field belongs comprises:

when the match field represents an old match, determining the source data block from the second program file; or when the match field represents a self match, determining the source data block from the intermediate file obtained in the process of generating the first program file.

6. The method according to any one of claims 1 to 5, wherein before the reading the source data block to the RAM, the method further comprises:
when a quantity of source data blocks in the RAM exceeds a first threshold, replacing, with the source data block, a source data block that is not used for the longest time in the RAM.

7. A program update method, wherein the method is applied to a server, and the method comprises:

obtaining a first program file and a second program file of a target program, wherein the target program is a program that needs to be upgraded on an electronic device, the first program file and the second program file are program files of different versions of the target program, and a version of the first program file is later than a version of the second program file;
determining a match sequence and a non-match data stream based on match costs, non-match costs, and load costs of data in the first program file and the second program file, wherein the load cost is a cost of reading data in the second program file when the first program file is generated on the electronic device or a cost of obtaining data in an intermediate file in a process of generating the first program file on the electronic device, the match sequence comprises a match field and a non-match field, the match field indicates that a string in the first program file matches a string other than the first string in the first program file or a string in the second program file, and the non-match field indicates that a string in the first program file is the same as a string in the non-match data stream; and
generating an upgrade package of the target program based on the match sequence and the non-match data stream, wherein the upgrade package indicates a difference between the first program file and the second program file.

8. The method according to claim 7, wherein the match costs of the data in the first program file and the second program file comprise an old-match cost and a self-match cost, wherein the old-match cost is a cost of finding, for a string in the first program file, another matched string in the second program file, and the self-match cost is a cost of finding, for a string in the first program file, another matched string other than the first string in the first program file.

9. The method according to claim 8, wherein the determining a match sequence and a non-match data stream based on match costs, non-match costs, and load costs of data in the first program file and the second program file of the target program comprises:

obtaining at least one matching overhead based on match costs, non-match costs, and load costs of the data in the first program file and the second program file in different matching manners; and
selecting a lowest matching overhead from the at least one matching overhead, and determining the match sequence and the non-match data stream of the first program file based on a match cost, a non-match cost, and a load cost that correspond to the lowest matching overhead.

10. An electronic device, comprising:

at least one memory, configured to store a program; and
at least one processor, configured to execute the program stored in the memory, and when the program stored in the memory is executed, the processor is configured to perform the method according to any one of claims 1 to 6.

11. A server, comprising:

at least one memory, configured to store a program; and
at least one processor, configured to execute the program stored in the memory, and when the program stored in the memory is executed, the processor is configured to perform the method according to any one of claims 7 to 9.

12. A computer-readable medium, wherein the computer storage medium stores instructions, and when the instructions are run on a computer, the computer is enabled to perform the method according to any one of claims 1 to 6 or claims 7 to 10.

13. A computer program product comprising instructions, wherein when the instructions are run on a computer, the computer is enabled to perform the method according to any one of claims 1 to 6 or claims 7 to 9.

FIG. 1

FIG. 2

FIG. 3

FIG. 4

FIG. 5

② Literal: d e p
t=8 and M2={non_match, none, 3}

| 1 | 2 | 3 | 4 | 5 | 6 | 7 | 8 | 9 | 10 | 11 | 12 | 13 | 14 |
|---|---|---|---|---|---|---|---|---|----|----|----|----|----|

New: a  b  e  d  c  f  a  d  e  p  d  c  f  a

Old: a  b  e  d  c  f  a  a

| 1 | 2 | 3 | 4 | 5 | 6 | 7 | 8 |
|---|---|---|---|---|---|---|---|

③ t=11 and M3={self_match, 7, 4}

① t=1 and M1={old_match, 0, 7}

FIG. 6

Data block

Block reload cost (length R)

Match field

Old file

New file

Case 1:
Single match and length<R
Not accepted

Case 2:
A plurality of matches and
length<R
Not accepted

Case 3:
Single match and length>R
Accepted

FIG. 7

Old file    | 2 | 1 | 3 |   ...   | Block 2 |

         Block 1

New file    | Block 1 |   ...   | 1 | 2 | 3 |

                      Block 2

|   | Data block |
|   | Block reload cost (length R) |
|   | Match field |

## FIG. 8

Old file

New file

Differential
package

FIG. 9

ROM: old file block

RAM: cache file block<200 KB

ROM: new file

FIG. 10

| Obtain a first program file and a second program file of a target program | 1101 |

↓

| Determine a match sequence and a non-match data stream based on match costs, non-match costs, and load costs of data in the first program file and the second program file of the target program | 1102 |

↓

| Generate an upgrade package of the target program based on the match sequence and the non-match data stream, where the upgrade package indicates a difference between the first program file and the second program file | 1103 |

FIG. 11

| Obtain an upgrade package of a target program, where the upgrade package carries a match sequence and a non-match data stream | 1201 |

↓

| Parse the upgrade package in a random access memory RAM to obtain a match field, a non-match field, and the non-match data stream | 1202 |

↓

| Based on a sequence of the match field and the non-match field in the match sequence, when a field that currently needs to be operated is the match field, determine a source data block to which a string associated with the match field belongs; or when the field that currently needs to be operated is the non-match field, read, from the non-match data stream, a target string associated with the non-match field | 1203 |

↓

| Generate a first program file based on at least one source data block in the RAM and/or the target string | 1204 |

FIG. 12

## INTERNATIONAL SEARCH REPORT

| International application No. |
|---|
| **PCT/CN2024/078554** |

**A.    CLASSIFICATION OF SUBJECT MATTER**

G06F 8/65(2018.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 程序, 软件, 升级, 差值, 差分, 匹配, 相同, 字符串, 序列, 数据块, 位置, 长度, program, software, upgrade, difference, differential, match, identical, string, sequence, data block, position, length

**C.    DOCUMENTS CONSIDERED TO BE RELEVANT**

| Category* | Citation of document, with indication, where appropriate, of the relevant passages | Relevant to claim No. |
|---|---|---|
| A | CN 111522574 A (PING AN TECHNOLOGY (SHENZHEN) CO., LTD.) 11 August 2020 (2020-08-11)<br>  description, paragraphs 61-106 | 1-13 |
| A | CN 102831001 A (BEIJING BENY WAVE SCIENCE AND TECHNOLOGY CO., LTD.) 19 December 2012 (2012-12-19)<br>  entire document | 1-13 |
| A | CN 109814893 A (ZTE CORP.) 28 May 2019 (2019-05-28)<br>  entire document | 1-13 |
| A | CN 111176704 A (CHINA MOBILE (HANGZHOU) INFORMATION TECHNOLOGY CO., LTD. et al.) 19 May 2020 (2020-05-19)<br>  entire document | 1-13 |
| A | US 2013046740 A1 (VMWARE, INC.) 21 February 2013 (2013-02-21)<br>  entire document | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 April 2024** | **10 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/078554**

| Patent document cited in search report | | | Publication date (day/month/year) | Patent family member(s) | | | Publication date (day/month/year) |
|---|---|---|---|---|---|---|---|
| CN | 111522574 | A | 11 August 2020 | WO | 2021174836 | A1 | 10 September 2021 |
| CN | 102831001 | A | 19 December 2012 | None | | | |
| CN | 109814893 | A | 28 May 2019 | None | | | |
| CN | 111176704 | A | 19 May 2020 | None | | | |
| US | 2013046740 | A1 | 21 February 2013 | None | | | |

Form PCT/ISA/210 (patent family annex) (July 2022)

**REFERENCES CITED IN THE DESCRIPTION**

**Patent documents cited in the description**

- CN 202310932422